Europäisches Patentamt

European Patent Office

Office européen des brevets

(19)

(11) Publication number: **0 169 676**
**A2**

## (12) EUROPEAN PATENT APPLICATION

(21) Application number: **85304536.7**

(22) Date of filing: **25.06.85**

(51) Int. Cl.⁴: **G 06 F 11/00**

(30) Priority: **19.07.84 GB 8418442**

(43) Date of publication of application:
**29.01.86 Bulletin 86/5**

(84) Designated Contracting States:
**AT BE CH DE FR IT LI LU NL SE**

(71) Applicant: **RACAL-COMSEC LIMITED**
**Western Road Bracknell**
**Berkshire(GB)**

(72) Inventor: **Proudler, Graeme John**
**70 Wyndham Road**
**Salisbury Wiltshire, SP1 3AH(GB)**

(74) Representative: **Foster, David Martyn et al,**
**Mathisen, Macara & Co. The Coach House 6-8 Swakeleys**
**Road**
**Ickenham Uxbridge UB10 8BZ(GB)**

(54) **Improvements in and relating to data error detection.**

(57) A system is described for recognising a data word in a serially presented data stream by comparing the currently presented data with a predetermined datum word. The bits of the presented data are fed into the stages A to L of a shift register 6 which correspond to respective bits of the datum word. A monitoring unit 16 monitors the states of only those stages (stages D,G,I and K) corresponding to positions where changes in the value of the datum word occur, together with the start stage A and the final stage M. Merely monitoring these particular stages enables the unit 16 to measure the actual change in error (between the presented data word and the datum word) which will occur in response to the next data shift. An error counting unit 14 algebraically sums the error change values received on line 20 with an initialised count value (corresponding to a predetermined initial state of the register 6) to produce a total error signal on line 22. A comparator 24 compares this with a minimum acceptable error threshold on a line 26 so as to produce a recognition output on line 28.

FIG.1.

## BACKGROUND TO THE INVENTION

The invention relates to arrangements for detecting errors in data, specifically digital data. Embodiments of the invention to be described in more detail below are for use in recognising a received data word (comprising a plurality of data bits). Such a data word may be a preamble to a stream of data and needs to be recognised so as to place the receiving apparatus in a state of readiness - such as by synchronising it. Ideally of course, the recognition would be arranged to take place only when the received data word was exactly correct; that is, there were no errors between it and the predetermined form of the word. In a practical case, however, noise will be present and it may be unrealistic only to allow recognition when there are no errors at all. It is therefore known to measure the amount of error and to permit recognition when the amount of error is less than a predetermined threshold.

## BRIEF SUMMARY OF THE INVENTION

According to the invention there is provided a method of monitoring presented digital data in order to recognise a digital data word by comparison with a datum word, comprising the steps of determining, at each presentation of the digital data, the change in the number of errors between the presented digital data and the datum word as compared with the last presentation of the digital data, and accumulating the values of the said changes until the accumulated value indicates recognition.

According to the invention there is also provided a system responsive to presented digital data so as to recognise a digital data word by comparing the presented digital data with a datum word, comprising a plurality of storage locations respectively corresponding to the digits of the datum word, means for respectively storing the digits of the presented digital data in the said storage locations, means for shifting the digital data between the storage locations so that in response to each shift each digit moves to the next succeeding storage location, a fresh digit enters the first storage location and the digit in the storage location corresponding to the last digit in the datum word exits therefrom, monitoring means for monitoring the values of the digits in only those particular storage locations corresponding to positions in the datum word where changes in its digit values occur whereby to produce error change outputs corresponding to the changes in error between the presented digital data and the datum word resulting from the data shifts, and accumulating means for accumulating the values of the error change outputs whereby to recognise when the total error between the presented digital word and the datum word is less than a predetermined value.

## DESCRIPTION OF THE DRAWINGS

Data recognition systems and methods according to the invention will now be described, by way of example only, with reference to the accompanying diagrammatic drawings in which:

Figure 1 is a block diagram showing one form of the system;

Figure 2 is a more detailed block diagram of part of a modified form of the system;

Figure 3 is a block diagram of another form of the system; and

Figure 4 is a block diagram of part of a further form of the system.

## DESCRIPTION OF PREFERRED EMBODIMENTS

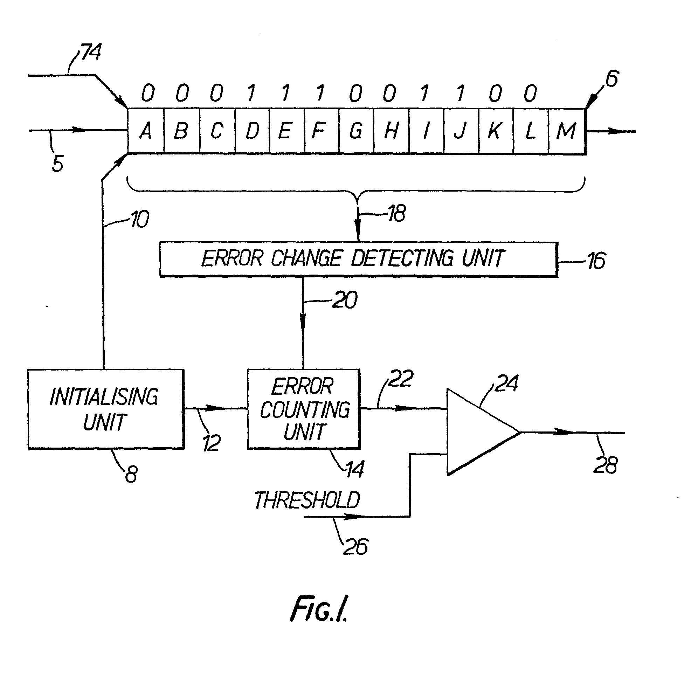

As shown in Figure 1, the system is intended to recognise an incoming data word which arrives on a line 5 connected to the input of a shift register 6. In this example, the shift register has thirteen stages A,B...M. The predetermined data word to be recognised (referred to below as the "datum word") has twelve data bits in this example and has the binary form (000111001100), as shown in Figure 1 immediately above the shift register 6.

When the system is set into operation, it is first initialised by an initialising unit 8. By means of a line 10, this sets the stages of the shift register 6 to be predetermined states. For example, it could set all stages of the shift register to binary 1. There will thus be a predetermined and known number of errors between the datum data word and the actual data word (the stream of binary 1's in the example being assumed) in the shift register 6, and, by means of a line 12, the initialising unit 8 sets the value of this initial error (seven, in fact) into an error counting unit 14.

In a manner to be described in more detail below, certain of the stages of the shift register 6 are connected to an error change detecting unit 16 by means of a data link shown generally at 18. By means of these lines, the unit 16 monitors certain of the stages of the shift register 6 each time a new data bit enters from the line 5 (and consequently shifts all the data bits in the shift register by one stage to the right), and (in a manner to be explained) determines whether there has been an increase in the error between the data word currently in the shift register and the datum word, a decrease in such error, or no change. Data representing this determination is fed to the unit 14 on a line 20 and alters the error count in that unit accordingly. The process is repeated each time a new bit enters the shift register 6 from the line 5.

In this way, therefore, the error counting unit 14 contians continuously updated data representing the number of errors between the actual data word in the shift register 6 and the datum word, and data representing the value of this error count is output on a line 22 to one input of a comparator 24. The other input receives an error threshold value on a line 26. When the actual error count falls below the threshold value, the comparator produces a recognition signal on a line 28, indicating that the incoming data word has been recognised - that is, it has not more than a predetermined (relatively small) number of errors as compared with the datum word.

Therefore, the system monitors only the actual change in number of errors, each time a new data bit arrives. It does not carry out a measurement of the total number of errors each time the data word in the shift register changes. In a manner to be explained, this means that only a certain number of the stages of the shift register 6 need to be monitored, resulting in simplified construction and increased speed of operation.

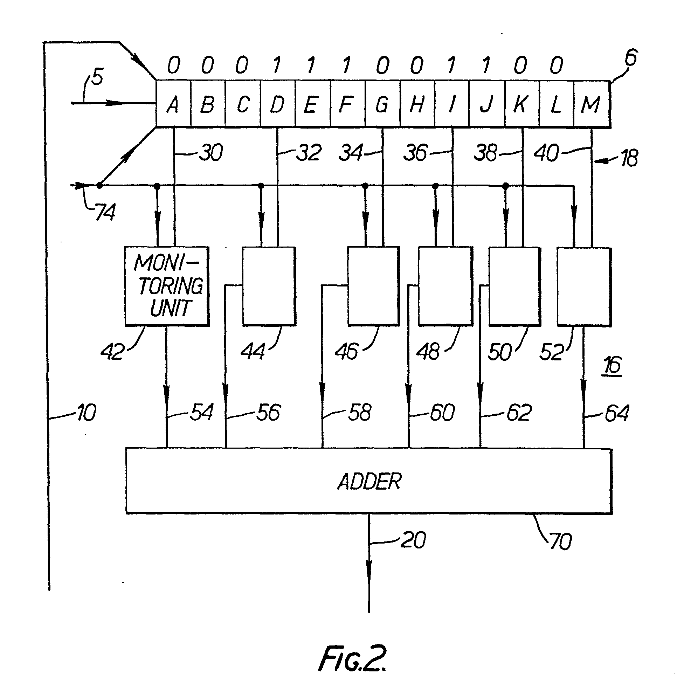

Figure 2 illustrates part of the system of Figure 1 in more detail, and items in Figure 2 corresponding to those in Figure 1 are correspondingly referenced. In particular, Figure 2 illustrates the data links 18 between the shift register 6 and the error change detecting unit 16 of Figure 1.

As shown, the data links 18 comprise links from certain of the stages only, of the shift register 6, these stages being stages, A,D,G,I,K and M, these links being referenced 30,32,34,36,38 and 40 respectively and each being connected to a respective monitoring unit 42,44,46,48,50 and 52. In the manner to be explained, each of these units 42 to 52 produces an output on a respective output line 54,56,58,60,62,64, each time there is a shift of data, each of these outputs representing part of the total change in the error between the actual data word in the shift register and the datum data word. The lines 54 to 64 are connected to an adding unit 70 which determines the algebraic sum of all the inputs on the lines 54 to 64 so as to produce the required total error change output on line 20 (see Fig. 1).

The operation of the monitoring units 42 to 52 will now be considered in more detail.

It will be noted that these units only monitor those stages of the register 6 corresponding to the positions where the state of the datum word changes from one binary value to the other (in addition, the stages A and M are monitored for a purpose to be explained). Thus, stage D corresponds to the position where the datum word changes from 0 to 1, stage G corresponds to the position where the datum word changes from 1 to 0, stage 1 corresponds to the position where the datum word changes from 0 to 1, and stage K corresponds to the position where the datum word changes from 1 to 0.

The system monitors only those stages indicated above because it is only data shifts from those stages (and into stages A and M) which can result in changes in the total error count.

Consider, first, position C. This is a stage where the "expected" data bit is 0, that is, this is the bit in the corresponding position of the datum word. If the actual data bit in stage C is in fact 0, it will contribute zero to the total error count. However, when that data bit 0 shifts (into stage D) it will shift into a position where the expected data bit is 1 - and will therefore increase the total error count by one. However, if the actual data bit in stage C is binary 1, the opposite applies. Thus, when this data bit is present in stage C it will be contributing one to the total error count. However, when that data bit shifts into stage D, it will there contribute zero to the total error count. In other words, there will be a decrease in the total error count of one.

Therefore, the rule which applies to those stages of the shift register 6 (stages D and I in this example) where the datum word changes from binary 0 to binary 1, when each data shift occurs, can be stated thus:-

TABLE 1

| Data bit | Change in total no. of errors |
|----------|-------------------------------|
| 1        | decrease by one               |
| 0        | increase by one               |

It is believed to be clear by analogy from the foregoing that the rule which applies for the positions in the shift register (stages G and K in this example) where the corresponding bit of the datum word  changes  from binary 1 to binary 0 can be status

thus:-

### TABLE 2

| Date bit | Change in total no. of errors |
|----------|-------------------------------|
| 1 | increase by one |
| 0 | decrease by one |

The effect of data shifts at the beginning and end  of
the shift regiter needs special consideration.   Thus,
for  all  the other stages considered  above,  a  data
shift  will either result in an increase in the  total
error  or a decrease;  it is not possible for there to
be no change in the error.   However, for stage A,  it
is  possible for  there to be no change in  the  total
error  (or an increase in the error) when a data shift
ito  this stage occurs:  thus,  if a binary  0 -enters
stage  A,  there will be no change n the error  count,
whereas  entry  of a binary 1 will increase the  total
error count; and of course if the bit of the data word corresponding to stage A were binary 1 instead of binary 0, entry of a binary 1 would result in no change in the error count and entry of a binary 0 would again result in an increase of the error. At the end of shift register 6, there can either be no change in the error count or a decrease in the error count when data shifts out of stage L. Thus, if (in the present example) the data bit in stage L is binary 0, its shift into stage M will result in no change in the total error count, while if it were a binary 1, its shift into stage M would decrease the total error count by one; correspondingly, if the bit in the data word corresponding to stage L were binary 1 instead of binary 0, the reverse would apply: that is, shift of a binary 1 from stage L to stage M would result in no change in the error count whereas shift of the binary 0 from stage L to stage M would result in a decrease of one in the total error count.

Therefore, the rule which applies to data shifts into the start stage, stage A, of the shift register can be summarised thus:-

TABLE 3

| Expected start data bit | Actual data bit | Change in total no. of errors |
|---|---|---|
| 0 | 0 | no change |
| 0 | 1 | increase by one |
| 1 | 0 | increase by one |
| 1 | 1 | no change |

The rule which applies to data shifts out of the stage (stage L) corresponding to the last bit in the datum word can be summarised thus:-

TABLE 4

| Expected end data bit | Actual data bit in stage M | Change in total no. of errors |
|---|---|---|
| 0 | 0 | no change |
| 0 | 1 | decrease by one |
| 1 | 0 | decrease by one |
| 1 | 1 | no change |

The foregoing explains why it is necessary for the shift register 6 to have one more stage than the number of bits in the datum word.

Each of the units 42 to 52 operates according to one of the rules defined by TABLES 1 to 4 above. Thus, each of these units receives the value of the data bit currently in the corresponding stage of the shift register 6 and monitors that value. Each of the units 42 to 52 is controlled by signals received on a line 74 which control the clocking of data into the shift register 6. Therefore, each time there is a shift of data, each of the units 42 to 52 produces an appropriate output (on the corresponding one of the output lines 54 to 64) in accordance with the actual value of the data bit in the corresponding stage of the shift register and in accordance with the particular rule (determined by the corresponding one of the TABLES above). Therefore, lines 56,58,60 and 62 will each carry a signal representing either an increase by one or a decrease by one in the total error count, line 54 will carry a signal representing either no change in the error count or an increase by one, while line 64 will carry a signal representing either no change in the error count or a decrease by one.    The   unit 70 therefore sums all the   individual
error-change   signals received on lines 54 to   64   and
the resultant total is output on line 20.              -

The  units   42 to 52 can be implemented as parts of  a
look-up table and so can the adder unit 70.   In fact,
it is clearly possible to implement the units 42 to 52
and   the   adder unit 70 by means of a   single   look-up
table  with   the   lines 30 to 40   being   connected   to
respective and predetermined addresses.   This follows
because, for any given combination of data bits on the
lines  30   to   40,   there will   clearly   be   a   single
corresponding output on line 20.

It will be apparent that the system described requires
(in   this   example)   only   six   of   the   stages   of   a
thirteen-stage   shift register to be monitored.   As a
generality,   it   is   found that systems   of   the   type
described   require on average slightly more than   half
the   total   number   of   shift register   stages   to   be
monitored  -  as   compared  with   other   systems   which
measure the total number of errors each time there   is
a data shift;   such other systems clearly require each
shift register stage to be monitored.   Obviously, the
saving  in   the number of shift register stages   which has to be monitored depends on the format of the datum word: the greater the number of data changes which it contains, the greater will be the number of shift register stages which have to be monitored.

The saving in the number of shift register stages which has to be monitored considerably reduces the complexity of the required circuitry and also considerably increases the speed of operation.

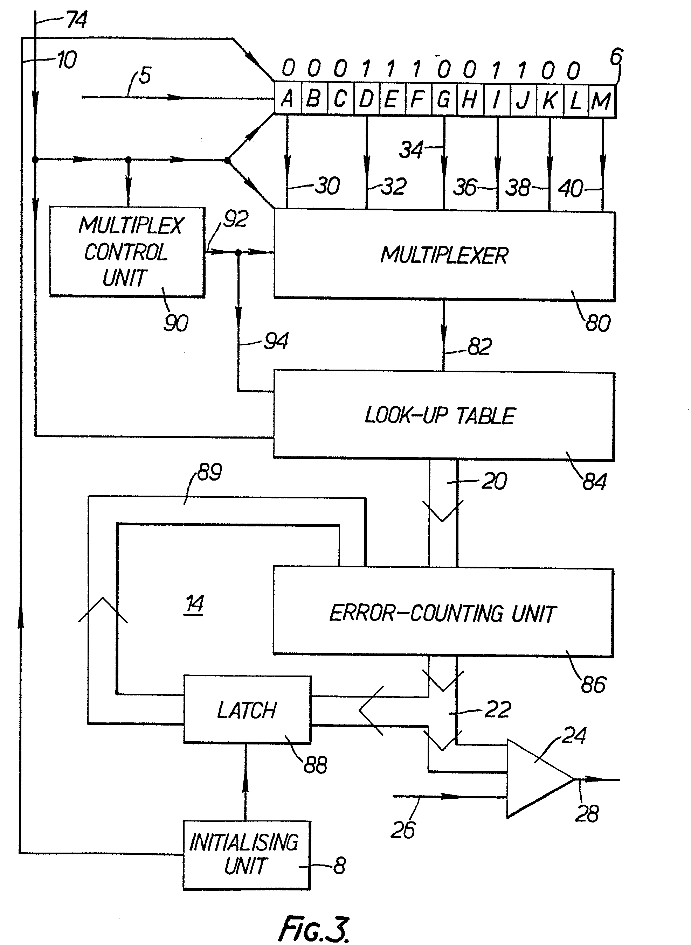

In practice, the datum word may contain a considerably greater number of data bits than the twelve assumed in this example. Therefore, even though the number of shift register stages which has to be monitored is very considerably reduced, there may still be a relatively large number to be monitored. However, a simplification of the circuitry can be achieved by multiplexing the operation as will now be described with reference to Figure 3 in which parts corresponding to those in the other Figures are correspondingly referenced.

As shown in Figure 3, the output lines 30 to 40 of the shift register 6 are connected into a multiplexer 80 which has an output channel 82 connected to a look-up table 84 which performs the functions of the monitoring units 42 to 52 and the adding unit 70 of Figure 2. The look-up table 84 produces a resultant change in error count, after each data shift, on the line 20. This is fed into an accumulator 86 which, together with a feedback-connected latch 88, carries out the function of the error counting unit 14 of Figure 1.

The multiplexer 80 is controlled by a multiplex-control unit 90. This is synchronised with the data shift signals received on line 74 and operates by connecting each of the lines 30 to 40 in turn to the look-up table 84 via the data channel 82, this control being exerted by means of a control line 92. In a practical example, the multiplexer 80 might not connect the lines 30 to 40 individually to the data output channel 82 but in groups.

Clearly, the TABLES above show that the rules which apply to the processing of the data received on the lines 30 to 40 are not all the same. As explained, the rules vary according to whether the relevant shift register stage is at the start or end of the shift register or is an intermediate stage. The look-up table 84 cannot therefore correctly process the data received on the channel 82 unless it is aware of the origin of that data. The look-up table 84 therefore has to be controlled by control signals on a line 94 so that the data received on channel 82 is fed to the correct addresses in the look-up table, according to whether it has originated from the start or end stages of the shift register or from an intermediate stage.

The accumulator 86 clearly has to carry out its accumulating function in a series of sequential steps corresponding to the multiplexing process. Thus, for a given state of the shift register 6, the multiplexer 80 carries out a sequence of steps during which the lines 30 to 40 are successively monitored (either individually or in groups). At the end of each such step, an output is produced on line 20 representing part of the total error change detected and this is fed into the accumulator 86 where it is added to the data currently being fed into the accumulator from the latch 88 via the feedback channel 89. The latch 88 carries data representing the previous state of the accumulator 86. It is assumed that the accumulator 86 has been initialised in the manner explained with reference to Figure 1. At the end of the sequence of steps corresponding to a single state of the shift register 6, the accumulator produces an output on line 22 corresponding to the actual number of errors between the data actually in the shift register 6 and the datum word.

The accumulator 86 may itself be in the form of a look-up table because the data inputs which it receives via channels 20 and 89 always correspond to a unique total error count on line 22. In fact, if the accumulator 86 is in the form of a look-up table, it may be arranged not simply to produce an output corresponding to the total error but in fact to produce an output indicating whether or not the word currently in the shift register 6 corresponds (within the predetermined error limit) with the datum word. In this way, therefore, the look-up table can carry out the function not only of the error counting unit 14 of Figure 1 but also the function of the comparator 24 as well.

In such a case, the look-up table constituting the unit 86 can also be programmed to produce a warning signal when the total error count has reached such a value to indicate that a fault has occurred: examples of this are a negative error or an error greater  than
the  total  length of the shift register  6.   Such  a
warning signal could be used to reset the system.

In  the  system  illustrated  in  Figure  3,  the
initialising  unit 8 would carry out the  initialising
process  by  holding the latch 88 in  a  predetermined
state for a complete sequence of multiplexing steps.

The  arrangement  shown in Figure 3 is complicated  by
the  fact  that  the  look-up  table  84  has  to  be
controlled,  by the control signals on the line 94, in
dependence  on  the origin of the signals on the  data
channel  82  - because of the  different  rules  which
apply  to  the  data bits in the  "start",  "end"  and
"intermediate"  stages of the shift  register  6.   In
other  words,  the look-up table cannot simply operate
by sensing the value of the data received on the  line
82 but must take into account where it has come from.

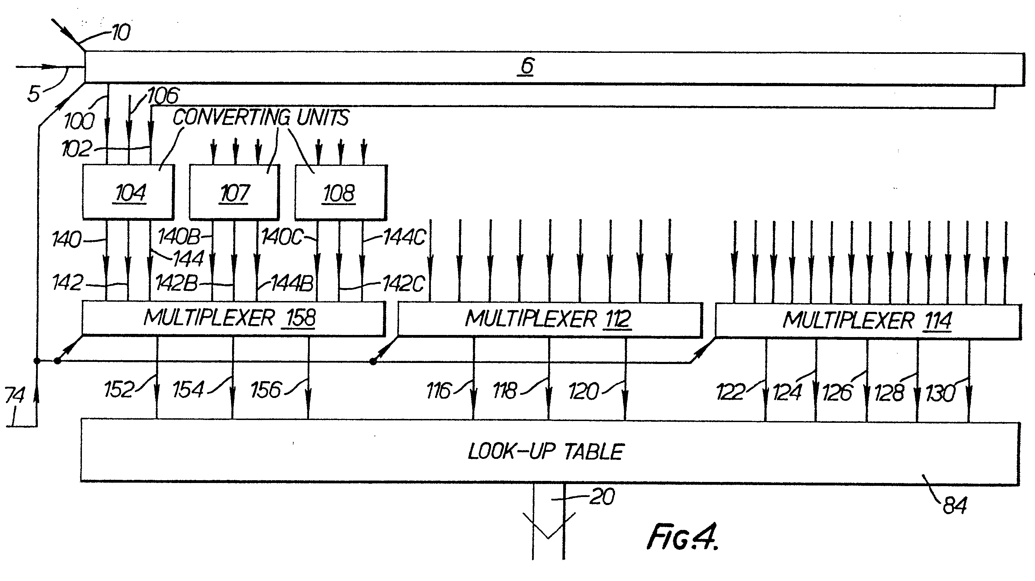

Figure  4  shows a modified arrangement which  can  be
used  in  certain circumstances and which avoids  this
problem.  In Figure 4, parts corresponding to those in
other  Figures  are  similarly  referenced.   The
arrangement to be described with reference to Figure 4 is only feasible where the total number of shift register stages to be monitored is the product of the number of inputs to the look-up table and the number of ways of multiplexing those inputs. In the particular example to be described with reference to Figure 4, the shift register 6 is assumed to have 63 stages, plus an "end" stage (corresponding to stage M of the embodiments previously described). The form of the datum word is such that thirty three of the total number of shift register stages have to be monitored. The look-up table 84 has eleven inputs and the multiplexing arrangement (to be described) can multiplex these eleven inputs in three ways, thus therefore requiring a sequence of three multiplexing steps to inspect all thirty three relevant stages of the shift register 6.

As shown in Figure 4, lines 100 and 102 respectively connect the "start" and "end" stages of the shift register 6 to a converting unit 104, together with a line 106 which comes from one of the intermediate stages of the shift register to be monitored. A second converting unit 107 has three inputs which are respectively connected to three intermediate stages of the shift register, and a third converting unit 108.

likewise has three inputs connected to three other intermediate stages of the shift register respectively.

A further nine intermediate stages of the shift register are connected to a multiplexing unit 112, these nine stages being stages for which the rule in TABLE 1 applies. The remaining fifteen of the thirty three monitored stages are connected to a further multiplexer 114, these stages being stages for which the rule in TABLE 2 applies.

To avoid complexity, the intermediate stages are not actually shown connected to the shift register.

Multiplexer 112 has three output lines 116,118 and 120 which are connected to the look-up table 84. The multiplexer 112 operates by connecting its nine input lines to the three output lines, three at a time.

The multiplexer 114 has five output lines 122,124,126,128 and 130 and operates by connecting its fifteen input lines to the five output lines, five at a time.

22    0169676

It will be appreciated that each of the lines 116 to 130 carries either a binary 0 or a binary 1 signal, according to the value of the data bits in the corresponding stage of the shift register 6.

The converting units 104, 107 and 108 operate by converting the binary data which they receive (which simply represent the values of the bits in the corresponding stages of the shift register) into a different form. As will be explained, this is done to take account of the fact that the rules which apply to data from the "start" and "end" stages of the shift register are different from the rule which applies to data from the intermediate stages.

It will be apparent from TABLE 3 that the data presented on line 100 (from the "start" stage of the shift register) can contribute either zero or plus one to the total error count, while, from TABLE 4, the data received on line 102 (from the "end" stage) can contribute zero or minus one to the total error count. The data presented on line 106 will either contribute plus one or minus one to the total error count (see TABLES 1 and 2). Therefore, the total error change produced by the data on the three lines 100,102 and 106 will have one of the following (decimal) values: -2,-1,0,+1,+2.

Each of the three input lines to the converting unit 107 can contribute either plus one or minus one to the total error change (from TABLES 1 and 2) and the same applies to the three input lines to the converting unit 110. The contribution of all three input lines of converting unit 107 to the total error change can therefore have any one of the following (decimal) values: -3,-1,+1,+3; and the same applies for the input lines to the converting unit 108.

Each converting unit 104,107,108 therefore converts the data received on its three input lines into data on three output lines which respectively represent the sign of the combined error change represented by the three inputs to that converting unit, the value of the most significant bit (MSB) in the binary representation of the decimal value of that combined error change and the value of the least significant bit (LSB) of that decimal value. Thus, for converting unit 104, line 140 carries a bit representing the sign, line 142 carries a bit representing the MSB value and line 144 carries a bit representing the LSB value.   For converting unit 107,   lines 140B,142B and
144B   correspond to lines 140,142 and 144 respectively
and so do lines 140C,142C and 144C of converting  unit
108.    In this way,   therefore,   the groups of signals
output  by the three converting units 104,107 and  108
represent, in the same format, the contribution to the
total  error change value made by the inputs to  those
converting  units  -  even though two of the inputs  to
the  unit  104 contribute to the  total  error  change
value   according   to  respective  rules  which   are
different  from  those  operating for  all  the  other
inputs to the converting units.

The   three groups of lines from the  converting  units
104,107  and  108 are connected to a  multiplexer  158
which has three outputs,  and the unit 158 operates by
connecting  its  nine  inputs  to  the  three  outputs
152,154 and 156,  three at a time, the outputs 152,154
and  156  being connected to respective inputs of  the
look-up table 84.

It  will  be apparent that the  described  arrangement
enables  the look-up table 84 to operate  directly  in
response  to  each  group  of  eleven  input  signals
presented  to it:  unlike the look-up table 84 in  the

0169676

embodiment shown in Figure 3,   it does not have to  be
functionally adjusted during the multiplexing cycle to
take   the   origins   of the data presented to  it   into
account.

Thus,     during   the   first   step   of   the   three-step
multiplexing cycle,   the look-up table 84 will receive
eleven inputs made up of (a)   three inputs from one of
the converting units 104,107 and 108 (via  multiplexer
158)   and   representing the sign,   MSB and LSB of   the
error-change contribution made by the three inputs  to
that   converting unit,   (b) three inputs from the nine
lines fed to the multiplexer 112,   and (c) five inputs
from   the   fifteen lines fed to the   multiplexer   114.
During the second multiplexing step,   it receives   (a)
three   inputs   from   a   different, one   of   the   three
converting   units   104,107 and 108,   (b) three   inputs
from   a   different group of three of   the   nine   lines
feeding   multiplexer 112,   and (c) five inputs from   a
different   group of five of the fifteen lines   feeding
multiplexer   114.   Finally,   in the third step of the
multiplexing cycle,   it receives (a) three inputs from
the third one of the converting units 104,108 and 110,
(b) three inputs from the final group of three of   the
nine lines feeding the multiplexer 112,   and (c) five inputs from the final group of five of the fifteen lines feeding the multiplexer 114.

Obviously, the look-up table 84 is set up so as to take into account the difference in format between the data presented on the lines 152,154 and 156 on the one hand and the data presented on the other eight input lines on the other hand.

After each step of the multiplexing cycle, the look-up table 84 produces an error-change value on the output line 20 and this may be fed to an accumulator of the form described with reference to Figure 3 for measurement of the total error and for carrying out the final recognition process.

In the system described, the monitored stages of the shift register are those stages which immediately follow a change in the value of the datum word. However, instead, stages immediately preceding changes in the value of the datum word could be monitored. In such a case, the extra stage, stage M, would be replaced by a stage preceding stage A.

CLAIMS

1. A method of monitoring presented digital data in order to recognise a digital data word by comparison with a datum word, characterised by the steps of determining, at each presentation of the digital data, the change in the number of errors between the presented digital data and the datum word as compared with the last presentation of the digital data, and accumulating the values of the said changes until the accumulated value indicates recognition.

2. A method according to claim 1, characterised in that the recognition is indicated when the said accumulated value is less than a finite threshold.

3. A method according to claim 1, characterised in that the digits of the presented digital data are associated with respective digit positions a plurality of which respectively correspond to the digits of the datum word, and each new presentation of the digital data involves the movement of each digit thereof into the next succeeding digit position with the arrival of a fresh digit in the digit position corresponding to the first digit of the datum word and the movement of

28 0169676

the digit out of the digit position corresponding to the last digit of the datum word.

4. A method according to claim 3, characterised in that the determination step comprises the step of inspecting only the values of the digits of the presented digital data in those particular digit positions corresponding to positions in the datum word where changes in its digit values occur.

5. A method according to claim 4, characterised in that the said particular digit positions correspond to (a) the first digit position, (b) those intermediate digit positions each corresponding to a digit in the datum word immediately following a digit therein of different value, and (c) the digit position immediately following the one corresponding to the last digit of the datum word.

6. A method according to claim 4, characterised in that the said particular digit positions correspond to (a) the first digit position, (b) those intermediate digit positions each corresponding to a digit in the datum word immediately preceding a digit therein of different value, and (c) the digit position immediately preceding the one corresponding to the first digit of the datum word.

7. A method according to claims 4 to 6, characterised by the step of inspecting the values of the digits in all the said particular digit positions and comparing that particular combination of values with a plurality of predetermined possible combinations of values whereby to produce an error change output constituting the value of the change in error of the presented digital data (as compared with the error of the previously presented digital data) corresponding to that particular combination of values.

8. A method according to claim 7, characterised in that the step of inspecting the values of the digital data in the said particular digit positions is carried out by inspecting the values of the digital data in all the said particular digit positions simultaneously.

9. A method according to claim 7, characterised in that the step of inspecting the values of the digital data in the said particular digit positions is carried out in a sequence of successive steps, each corresponding to a particular group comprising some only of the total number of said particular digit positions whereby to produce a partial error change output corresponding to each such step, and including the step of accumulating all the partial error changes to produce the said error change output.

10. A method according to any preceding claim, characterised by the step of producing an initial error count value corresponding to a predetermined total error value between initially presented predetermined digital data and the said datum word, and changing this initial count value in accordance with the value of each determined change in the number of errors.

11. A method according to any preceding claim, characterised in that the digital data is binary data.

12. A system responsive to presented digital data so as to recognise a digital data word by comparing the presented digital data with a datum word and for carrying out the method of any preceding claim, characterised by a plurality of storage locations (6) respectively corresponding to the digits of the datum

31
0169676

word, a device (5) for respectively storing the digits of the presented digital data in the said storage locations (6), a device (74) for shifting the digital data between the storage locations (6) so that, in response to each shift, (a) each digit moves to the next succeeding storage location, (b) a fresh digit enters the first storage location and (c) the digit in the storage location corresponding to the last digit in the datum word exits therefrom, a monitoring device (16;42 to 52;84) for monitoring the values of the digits in only those particular storage locations corresponding to positions in the datum word where changes in its digit values occur whereby to produce error change outputs corresponding to the changes in error between the presented digital data and the datum word resulting from the data shifts, and an accumulating device (14) for accumulating the values of the error change outputs whereby to recognise when the total error between the presented digital word and the datum word is less than a predetermined value.

13. A system according to claim 12, characterised in that the said particular storage locations correspond to (a) the first digit position (A), (b) those intermediate digit positions (D,G,I,K) each corresponding to a digit in the datum word immediately following a digit therein of different value, and (c) the digit position immediately following the one corresponding to the last digit of the datum word.

14. A system according to claim 12, characterised in that the said particular storage locations correspond to (a) the first digit position (A), (b) those intermediate digit positions (D,G,I,K) each corresponding to a digit in the datum word immediately preceding a digit therein of different value, and (c) the digit position immediately preceding the one corresponding to the first digit of the datum word.

15. A system according to any one of claims 12 to 14, characterised in that the predetermined value has a finite value.

16. A system according to any one of claims 12 to 15, characterised in that the monitoring device comprises a device (84) defining a look-up table for comparing the combination of values of the digits in the said particular storage locations with a plurality of possible combinations of values thereby to determine the error change value.

17. A system according to any one of claims 12 to 16, characterised by a multiplexing device (80) for monitoring the values of the digits in the said particular storage locations in a sequence of steps during each of which the values of the digits in part only of the total number of said particular storage locations are monitored.

18. A system according to any one of claims 12 to 17, characterised in that the said accumulating device comprises a device (8) for establishing an initial total error count value corresponding to the total error between the digital data then in the said storage locations and the datum word, and a device (86) for algebraically adding the values of the error change outputs to this initial total error count.

19. A system according to any one of claims 12 to 18, characterised in that the digital data comprises binary data.

20. A system according to any one of claims 12 to 19, characterised in that the storage locations constitute at least part of a shift register.

Fig.I.

Fig.2.

Fig.3.

MULTIPLEXER 114
122 124 126 128 130
MULTIPLEXER 112
116 118 120
MULTIPLEXER 158
152 154 156
CONVERTING UNITS
104 107 108
100 102 106
140 142 144
140B 140C 142B 142C 144B 144C
84
74
20
10
5
6
LOOK-UP TABLE

Fig.4.